# EUROPEAN PATENT APPLICATION

(11) **EP 3 528 145 A1**
(43) Date of publication of application: **21.08.2019**
(21) Application number: 18305155.6
(22) Date of filing: 15.02.2018
(51) Int. Cl.: G06F 17/30

(54) **METHOD AND DEVICE FOR STORING AND RESTORING A NAVIGATION CONTEXT**

(71) Applicant: Alkymia, 78200 Buchelay (FR)
(72) Inventor: MIANCE, Marc, 13100 Le Tholonet (FR); BRELET, Thomas, 13013 Marseille (FR)
(74) Representative: Novagraaf Technologies

(57) **Abstract**

A method for restoring a navigation context for a first media content. Navigation context data comprises media access data and an identification of a set of one or more media objects of interest in a first portion of the first media content currently displayed in a first user interface, UI, window. The restoration of the navigation context comprises loading (269) the first media content on the basis of media access data, generating (270) on the basis of the loaded first media content a second media content comprising a set of one or more media object of interest; displaying (290) a second portion of the second media content in a second user interface window, wherein the second portion comprises at least one media object of interest among the set of one or more media objects of interest.

## Description

### TECHNICAL FIELD

The disclosure generally relates to the field of telecommunication and digital data processing and more specifically to a method for storing a navigation context, a method for restoring a navigation context and an associated electronic device and computer program.

### BACKGROUND

US Patent Application published under number US2017/0214640A1 discloses a method for sharing media contents between several users. The method includes the generation of one or more contribution media contents which are combined with a topic media content to generate an annotated media content in accordance with metadata (e.g. the association data) that specifies to which portion of the topic media content a contribution media content relates and / or how the topic media content has to be combined with each contribution media content to reproduce an annotated media content.

The topic media content has for example to be sent from a sending device to a recipient device on which the topic media content will be reproduced and combined with one or more annotation media contents.

In the disclosed method, the topic media content may be any media content displayed in a software application. For example, the media content may be a "static" web page (e.g. including a text, a photo, a video, interactive features/tools, etc) whose content remains the same for a given URL (Uniform Resource Location). In this case, the topic media content may be reproduced on a recipient device simply by loading the web page from a media server using the URL of the web page. On the contrary, the topic media content may also be a dynamically updatable media content whose content for a same URL may vary over time or in dependence upon a user location / user profile of a user for which the content is displayed. In this later case, using only a URL of a web page may not be enough for restoring a web page having the same state and content than the initial web page. For example, the content of a web page corresponding to a given URL may be dependent on a user profile or may be updated by the source media server. For example, searching web pages using a search engine on the basis of keywords may result in a list of web pages that is dependent on the user profile and / or the cookies of the user and / or the date at which the search is performed.

Further, in the disclosed method, the portion of the topic media content to which a contribution media content refers may be identified using for example coordinates in a two-dimensional coordinate system associated with the web page. However, the display screen of recipient device may have a size and / or resolution different from the sending device: thus the coordinate system is completely different and the stored coordinates may not be enough for reproducing a web page having the same content (at least visually, the layout on the screen may then vary from one display screen to another). In addition, the web page which is loaded using the URL of the source page may be amended in dependence upon the type of the target device (mobile version) on which the web page has to be displayed.

In addition, privacy problems may occur with at least a portion of the web page to be shared. For example, a web page displayed for a user on a social network, a blog, a microblogging web site, may comprise one or more media objects (e.g. publications, feeds, messages, search results, etc) that are dependent on entered keywords, on a subscription, on a user profile and / or on relationships with other users in the social network. The web page may for example include media objects that the concerned user is ready to share and other media items that the subscribing user does not want to share.

One solution would be to generate a screenshot of the web page to be shared or at least of the portion of the web page to be shared. However a screenshot is a "dead copy" of a web page insofar no interaction and / or navigation is possible starting from this screenshot. In that case, the receiving device will not be able to restore the interaction context.

Thus there appear a need for storing a context of navigation and / or restoring a context of navigation that preserves interaction and / or navigation context of a media content.

### SUMMARY

In general, in one aspect, the present disclosure relates to a method for restoring a navigation context. The method comprises storing a navigation context, wherein storing the navigation context comprises, storing media access data enabling to access to a first media content displayed in the software; identifying, in the first media content, a set of one or more media objects; identifying, in the set of one or more media objects, a set of one or more media objects of interest in a first portion of the first media content currently displayed in a first user interface, UI, window; and storing an identification of the one or more media objects of interest. The method comprises restoring the navigation context, wherein restoring the navigation context comprises loading the first media content on the basis of the media access data; generating a second media content on the basis of the loaded first media content, wherein the second media content comprises the set of one or more media object of interest; displaying a second portion of the second media content in a second UI window, wherein the second portion comprises at least one media object of interest among the set of one or more media objects of interest.

According to a second aspect, the present disclosure relates to a method for restoring a navigation context. The method comprises: obtaining navigation context data, the navigation context data comprising, media access data enabling to access to a first media content, wherein the first media content comprises a set of one or more media objects; an identification of a set of one or more media objects of interest that were displayed in a first portion of the first media content in a first user interface (UI) window during a navigation. The method further comprises: restoring the navigation context, wherein restoring the navigation context comprises: loading the first media content on the basis of the media access data; generating a second media content on the basis of the loaded first media content, wherein the second media content comprises the set of one or more media object of interest; displaying a second portion of the second media content in a second UI window, wherein the second portion comprises at least one media object of interest among the set of one or more media objects of interest.

According to a third aspect, the present disclosure relates to an electronic device including a processor, a memory operatively coupled to the processor, said memory comprising computer readable instructions which, when executed by the processor, cause the processor to carry out the steps of the method according to the first or second aspect.

According to a fourth aspect, the present disclosure relates to a computer program product comprising computer readable instructions which, when executed by a computer, cause the computer to carry out the steps of the method according to the first or second aspect.

Further aspects and embodiments of the method according to the first aspect and the method according to the second aspect are defined by the dependent claims.

### BRIEF DESCRIPTION OF THE DRAWINGS

The present disclosure will be better understood and its numerous aspects and advantages will become more apparent to those skilled in the art by reference to the following drawings, in conjunction with the accompanying specification, in which:
Fig. 1A is a schematic representation of a system for sharing media contents in accordance with one or more embodiments;
Fig. 1B is a schematic representation of an electronic device and computing server in accordance with one or more embodiments;
Figs. 2A-2B illustrate respectively a flow diagram of an exemplary method in accordance with one or more embodiments;
Figs. 3A- 3B illustrate respectively a flow diagram of an exemplary method in accordance with one or more embodiments;
Figs. 4A-4C represent user interfaces in accordance with one or more embodiments;
Figs. 5A-5C represent user interfaces in accordance with one or more embodiments;
Figs. 6A-6C represent user interfaces in accordance with one or more embodiments;
Figs. 7A-7D represent user interfaces in accordance with one or more embodiments;
Figs. 8A-8C represent user interfaces in accordance with one or more embodiments.

### DETAILED DESCRIPTION OF EMBODIMENTS

The present disclosure relates to a device, system and method for storing and / or restoring a navigation context. Different embodiments are disclosed herein.

The method for storing and / or restoring may be applied in a system for sharing media content between users as described in US2017/214640A1. The method for storing and / or restoring may be applied to any system implying the transmission of one or more media contents which have to be reproduced by a recipient electronic device.

The other advantages, and other features of the components disclosed herein, will become more readily apparent to those having ordinary skill in the art. The following detailed description of certain preferred embodiments, taken in conjunction with the drawings, sets forth representative embodiments of the subject technology, wherein like reference numerals identify similar structural elements.

In addition, it should be apparent that the teaching herein can be embodied in a wide variety of forms and that any specific structure and/or function disclosed herein is merely representative. In particular, one skilled in the art will appreciate that an embodiment disclosed herein can be implemented independently of any other embodiment and that several embodiments can be combined in various ways and that one or several aspects of different embodiments can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. Specifically, software instructions or computer readable program code to perform embodiments described herein may be stored, temporarily or permanently, in whole or in part, on a non-transitory computer readable medium of a local or remote storage device including one or more storage media.

As used herein, a computer storage medium may be any physical media that can be read, written or more generally accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, solid state memory, memory chip, RAM, ROM, EEPROM, smart cards, a relational database management system (RDBMS), a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

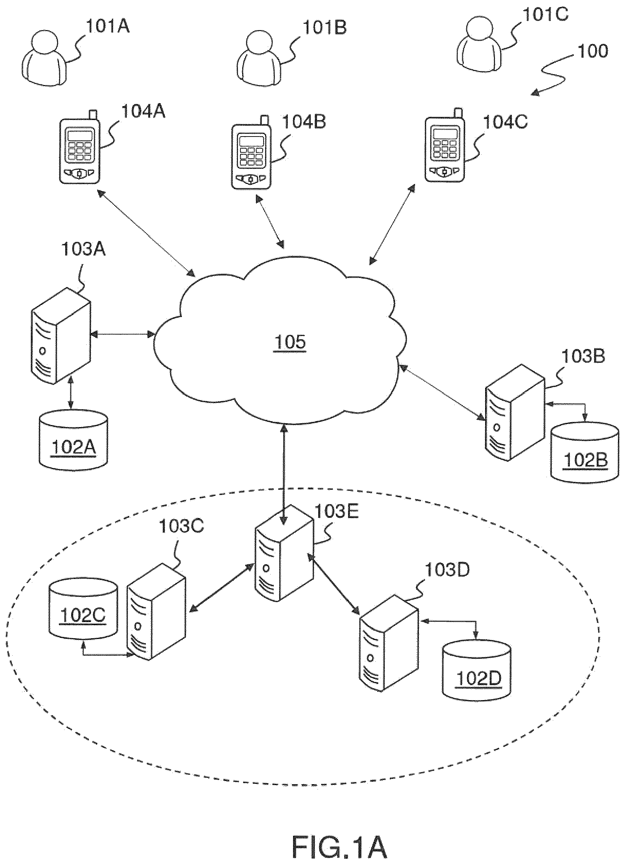

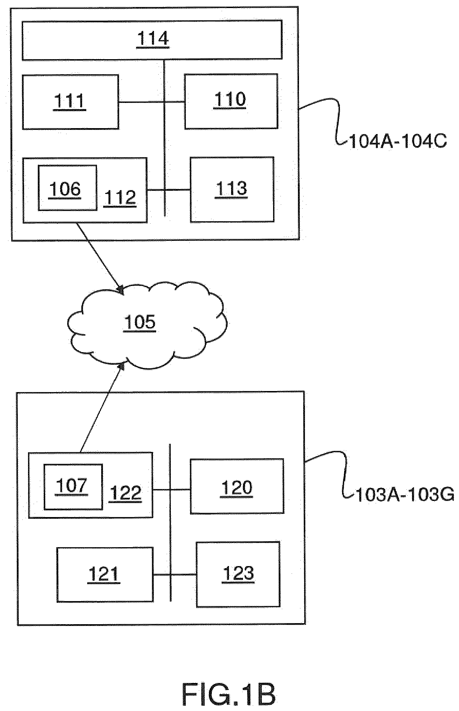

Turning now to the drawings, wherein like numbers denote like parts throughout the several views, Fig. 1 illustrates an example system 100 in which the various technologies and techniques described herein may be implemented.

The system 100 includes one or more computing servers 103A-103E and a plurality of electronic devices 104A-104C (e.g. user devices) which are operatively and communicatively coupled with one another through a network 105.

The network 105 may be any data transmission network, for example a wired (coaxial cable, fiber, twisted pair, DSL cable, etc.) or wireless (radio, infrared, cellular, microwave, etc.) network, a local area network (LAN), internet area network (IAN), metropolitan area network (MAN) or wide area network (WAN) such as the Internet, a public or private network, a virtual private network (VPN), a telecommunication network with data transmission capabilities, a single radio cell with a single connection point like a Wifi or Bluetooth cell, etc.

Each electronic device 104A-104C may be implemented as a single hardware device, for example in the form of a desktop personal computer (PC), a laptop, a personal digital assistant (PDA), a smart phone or may be implemented on separate interconnected hardware devices connected one to each other by a communication link, with wired and/or wireless segments.

Each electronic device 104A-104C generally operates under the control of an operating system and executes or otherwise relies upon various computer software applications, components, programs, objects, modules, data structures, etc.

As represented schematically on Fig. 1B, in one or more embodiments, a electronic device 104A-104C comprises a processor 110, memory 111, one or more computer storage media 112, and other associated hardware such as input/output interfaces (e.g. device interfaces such as USB interfaces, etc., network interfaces such as Ethernet interfaces, etc.) and a media drive 113 for reading and writing the one or more computer storage media 112.

The memory 111 of an electronic device 104A-104C may be a random access memory (RAM), cache memory, non-volatile memory, backup memory (e.g., programmable or flash memories), read-only memories, or any combination thereof. The processor 110 of a electronic device 104A-104C may be any suitable microprocessor, integrated circuit, or central processor (CPU) including at least one hardware-based processor or processing core.

In one or more embodiments, each computer storage medium or media 112 of a electronic device 104A-104C may contain computer program instructions which, when executed by the processor 110, cause the electronic device 104A-104C to perform one or more method described herein for a electronic device 104A-104C. The processor 110 of a electronic device 104A-104C may be configured to access to said one or more computer storage media 112 for storing, reading and/or loading computer program instructions or software code that, when executed by a processor, causes the processor to perform the steps of a method described herein for a electronic device 104A-104C. The processor 110 of an electronic device 104A-104C may be configured to use the memory 111 of a electronic device 104A-104C when executing the steps of a method described herein for a electronic device 104A-104C, for example for loading computer program instructions and for storing data generated during the execution of the computer program instructions.

Each electronic device 104A-104C also generally receives a number of inputs and outputs for communicating information externally. For interface with a user 101A-101C or operator, an electronic device 104A-104C generally includes a user interface 114 incorporating one or more user input/output devices, e.g., a keyboard, a pointing device, a display, a printer, etc. Otherwise, user input may be received, e.g., over a network interface coupled to the network 105, from one or more external computers, e.g., one or more electronic device 104A-104C or other computing servers 103A-103E.

Returning to Fig. 1A, each computing server 103A-103E may be implemented as a single hardware device or may be implemented on separate interconnected hardware devices connected one to each other by a communication link, with wired and/or wireless segments. Each computing server 103A-103E may be implemented within a cloud computing environment.

In one or more embodiments, the set of computing servers 103A-103E include at least three media servers 103A-103C, a database server 103D and a front-end server 103E.

Each computing server 103A-103E generally operates under the control of an operating system and executes or otherwise relies upon various computer software applications, components, programs, objects, modules, data structures, etc.

As represented schematically on Fig. 1B, in one or more embodiments, each computing server 103A-103E includes a processor 120, memory 121, one or more computer storage media 122, and other associated hardware such as input/output interfaces (e.g. device interfaces such as USB interfaces, etc., network interfaces such as Ethernet interfaces, etc.) and a media drive 123 for reading and writing the one or more computer storage media 122.

The memory 121 of a computing server 103A-103E may be a random access memory (RAM), cache memory, non-volatile memory, backup memory (e.g., programmable or flash memories), read-only memories, or any combination thereof. The processor 120 of a computing server 103A-103E may be any suitable microprocessor, integrated circuit, or central processor (CPU) including at least one hardware-based processor or processing core.

In one or more embodiments, each computer storage medium or media 122 of a computing server 103A-103E may contain computer instructions which, when executed by the processor 120, cause the computing server 103A-103E to perform one or more method described herein for a computing server 103A-103E. The processor 120 of a computing server 103A-103E may be configured to access to said one or more computer storage media 122 for storing, reading and/or loading computer program instructions or software code that, when executed by a processor, causes the processor to perform the steps of a method described herein for a computing server 103A-103E. The processor 120 of a computing server 103A-103E may be configured to use the memory 121 of a computing server 103A-103E when executing the steps of a method described herein for a computing server 103A-103E, for example for loading computer program instructions and for storing data generated during the execution of the computer program instructions.

Each electronic device 104A-104C is operatively connected to one or more computing servers 103A-103E through the network 105. Each electronic device 104A-104C is configured to communicate through at least one communication link with at least one of the computing servers 103A-103E.

In one or more embodiments, each electronic device 104A-104C executes computer program instructions of a software application 106 (also referred to as "client application 106") that, when executed by the processor of the electronic device, causes the processor to perform the method steps described herein for any of the electronic devices104A-104C.

In one or more embodiments, the computing server 103E is configured to execute computer program instructions of a server software application 107 (also referred to as "server application 107") that, when executed by the processor of one of the computing server 103E, causes this processor to perform the method steps described herein for one of the computing server 103E.

In one or more embodiments, the server application 107 is executed by the front-end server 103E, which is itself operatively connected to at least one of the computing servers 103C, 103D for implementing the steps of a method described herein for the server application 107.

Each instance of the client software application 106 and the server software application 107 are configured to be operatively coupled to each other to communicate in a client / server mode through at least one communication link. The communication link between a client software application 106 and the server software application 107 may use any suitable communication protocol. For example, a HTTP (Hyper Text Transfer) based protocol may be used, such a web service communication protocol like SOAP (Simple Object Access Protocol). Any other protocol may be used, for example a proprietary protocol.

In one or more embodiments, the software application 106 of an electronic device 104A-104C is operatively connected to the server application 107 for implementing a method for storing and restoring navigation context(s). The software application 106 includes computer program instructions for communicating by means of messages with the server application 107. In one or more embodiments, the software application 106 includes computer program instructions for generating, sending to the server application 107 and for receiving and processing messages received from the server application 107. The server application 107 may include computer program instructions for communication with the software application 106, in particular for generating and sending to the software application 106 and for receiving and processing messages received from the software application 106.

In one or more embodiments, the software application 106 is for example a software for displaying and navigation through the World Wide Web, an intranet, an internet, etc. The present description is however applicable to any kind of software application for displaying media content.

In one or more embodiments, a user interface of the software application 106 of electronic device 104A may include at least one user interface item for generating and / or selecting one or more media content. For example, the user interface may include a user interface item (button, menu, etc.) for triggering the display of a user interface for searching and / or selecting one or more media contents. For example, the user interface includes a toolbar for generating or importing media content.

Each media server 103A-103C is operatively coupled to one or more media content databases 102A-102C for storing media content and associated metadata. Each media server 103A-103C provides an interface for receiving and processing data request for media content stored in one media content database 102A-102C, for example request for storing media content in one media content database 102A-102C and for retrieving, searching, modifying media content stored in one media content database 102A-102C.

Each media server 103A-103C may be any web server application, remote server application, storage server in a cloud, or more generally any software application configured to store and retrieve media content and to process upload requests - or respectively download requests - from a remote device for uploading - or respectively downloading - one or more media contents. For example, the media server 103A is a web server which is accessible through Internet from all the electronic devices 104A-104C, the media server 103B is a media server in a cloud computing environment, which is accessible only for one of the electronic devices 104A-104C.

In one or more embodiments, the media server 103C may be implemented as a content delivery network (CDN) for storing content which have to be available not only from the front-end server 103E but also from any of the electronic devices 104A-104C. The media server 103C is used for storing media content, which are stored on one of the electronic devices 104A-104C or one of the media server 103A-103B when this media content have to be accessible from each of the electronic devices 104A-104C.

In the context of the present disclosure, a media content may include a video content, an audio content, a text content, an image content, a graphic content, or any combination thereof, for example a web page or a multimedia content. Video content maybe 3D content, stereoscopic 3D video content, 2D video content, a list of independently coded images, etc. Audio content may include mono audio content, stereo audio content, 3D audio content, etc. Media content may be coded in any format including, for example, JPEG, TIFF, MPEG, WAV, DOC, HTM, OBJ, DAE, FBX, DXF, X3D, MOV (QUICKTIME®), etc.

The media content data may be encoded within one or more data files. For example, video content may be encoded as a group of images, each image being encoded in a separate data file.

In one or more embodiments, a first media content (e.g. a web page) is displayed in a user interface (UI) window of the software application 106 on a source electronic device (e.g. electronic device 104A). A user 101A of the source electronic device is navigating into the first media content, for example by scrolling the first media content, triggering actions, etc. At some point during the navigation - for example upon performing a given interaction, upon request of the user 101A or when some predetermined condition is met - the navigation context data defining a navigation context relatively to the currently displayed the first media content are stored.

In one or more embodiments, the software application 106 is configured to analyze the content of the first media content (e.g. the HTML code of the web page), to detect one or more media objects of interest in the first media content and to determine the navigation context data on the basis of the detected media objects of interest. The restoration of the navigation context relatively to the first media content is performed on the basis of the detected media objects of interest and so as to restore these one or more media objects of interest.

A media object may be any object included in the first media content: a text, a photo, a video, a menu, an hyperlink, a graphic, a preview of a document, an icon, a button, etc. The one or more media objects detected may be objects that are currently visible (i.e. currently displayed) in the UI window or currently not visible in the UI window.

A media object may be an interactive media object or a non-interactive media object. For example, a menu, a hyperlink or a button is a typical interactive media object. For example, a photo may also be made interactive when a URL is associated to the photo. An interactive media object may be configured to trigger the execution of one or more interaction functions.

The navigation context data defining a navigation context relatively to a currently displayed first media content may be used for restoring the navigation context relatively to this first media content on a destination electronic device (e.g. electronic device 104B). The destination electronic device may be distinct from the source electronic device or be the same device.

In one or more embodiments, to restore a navigation context, a second media content is generated that reproduces at least partially the first media content. One or more media object(s) of interest may be restored in the second media content such that visible content of the current UI window is identical (or at least similar) to the visible content at the time the navigation context was stored (same point of view on the media content).

In one or more embodiments, one or more volatile media object(s) may be identified and restored in the second media content so that the dynamic state (e.g. the context sensitive content) of the first media content is restored in the second media content. Thus the navigation in the second media content can be performed with the same context parameters than the navigation in the first media content at the time the navigation context was stored. Volatile media objects refer to the content of the first media content that depends on the navigation context. Volatile media objects may be media objects that, for given media access data, may vary, be amended, be present / absent, be presented in a different order, etc, in dependence upon one or more context parameters. In one or more embodiments, context parameters may comprise: user location, user cookies, user profile, user rights, and / or current time. Non-volatile media objects may refer to the permanent content of the first media content that does not depend on the context parameters. Non-volatile media objects may be retrieved - independently of the navigation - using the media access data, while it may be not possible to retrieve the volatile media objects using only the media access data.

For example, searching web pages using a search engine on the basis of keywords may result in a list of web links, wherein this list is dependent on the user profile and / or the cookies of the user and / or the date at which the search is performed. Thus, the search results, the list of results and the order in which the results are presented may vary in dependence upon the navigation context, e.g. upon the personalization parameters (e.g. user profile, user location and / or the user cookies) and / or the date at which the search is performed. In which case, in order to restore the navigation context, the resource access data of all the search results in the web page as well as the ordered result list are stored by the computing server 103E in order to be able to restore a web page with the same result list comprising the search results in the same order.

For example, on a web site for selling products, the media objects for presenting a list of products resulting from a search may be identified as volatile media objects, while the media objects for presenting a product description pointed by an item in the list may be processed as non volatile media objects. The identification of the media objects may thus be adapted to the type of web site or the type of web application or be specific to a web site. In one or more embodiments, all media objects in a page may be identified as volatile media objects.

The layout of the second media content may be identical or different to that of the first media content. In one or more embodiments, the layout of the second media content is different from the layout of the first media content, for example in order to be adapted to the resolution and / or size of the display screen of the destination electronic device.

In one or more embodiments, the stored navigation context metadata may be used as a bookmark enabling a restoration of a navigation and / or interaction context in a media content at the time of the creation of the bookmark. In one or more embodiments, the bookmark refers to a specific point of view and / or to one or more media objects of interest in a given media content. For a same media content, one or more such bookmarks may be stored for enabling a restoration of the corresponding navigation context. One or more bookmarks may be stored for different media contents.

In one or more embodiments, the navigation context data (or bookmarks) are stored on a computing server 103E so as to be able to share this navigation context data (or bookmarks) with different users / different destination electronic devices. In one or more embodiments, the navigation context data (or bookmarks) are stored locally by a source electronic device and may further be transmitted for restoration to a destination electronic device. The navigation context data (or bookmarks) may be stored in a memory, a database, in configuration files associated with a software, etc.

A user 101B of the destination electronic device may navigate in the second media content. In one or more embodiments, interaction function associated the interactive media object(s) in the second media content are restored.

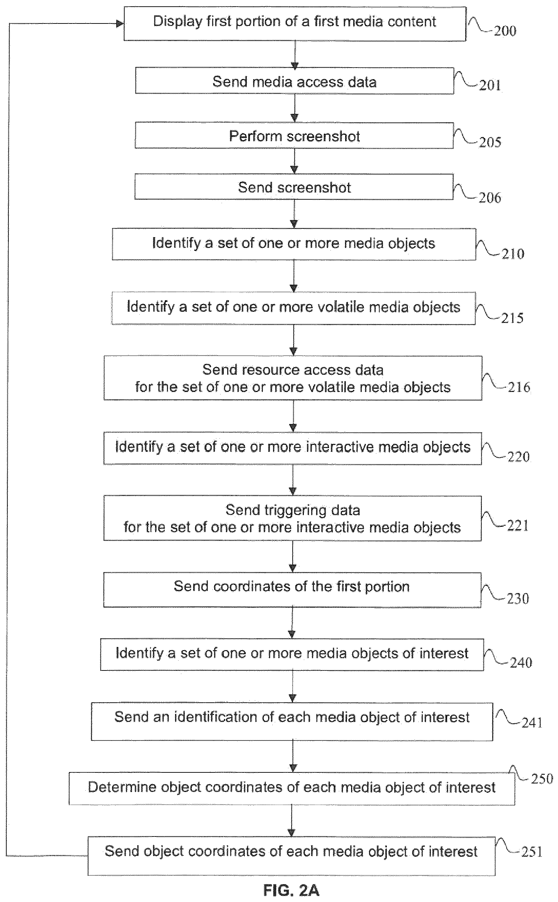

FIG. 2A represents a flow chart of a method for storing a navigation context in accordance with one or more embodiments. While the various steps in the flowchart are presented and described sequentially, the man skill in the art will appreciate that some or all of the steps may be executed in different orders, may be combined or omitted, and some or all of the steps may be executed in parallel.

The method steps may be implemented by a source electronic device (e.g the electronic device 104A of user 101A) according to any embodiment disclosed herein and a storage device for storing the navigation context data. The storage device may be included in source electronic device or be a separate device. In one or more embodiments, the storage device may be a computing server (e.g. the front-end server 103E), a database 102A-102B, another electronic device 104B, 104C or may be included into a such device.

In one or more embodiments, in order to share the media contents, a media content displayed on a display screen of the source electronic device 104A has to be transferred to the other electronic devices of the plurality of electronic devices 104B-104C (i.e. the destination electronic devices), through the computing server 103E. The computing server 103E manages a database for storing the media access data and associated metadata. The associated metadata includes navigation context metadata on the basis of which a navigation context may be restored.

In the below description, the method steps are implemented by the client application 106 of the source electronic device 104A and by the server application 107 of the front-end server 103E used as storage device, but are applicable to any other storage device and any other software application for displaying media contents.

In step 200, a first media content M1 (e.g. a web page) is displayed in a first UI window W1 of the software application 106 on a display screen of the source electronic device 104A. In one or more embodiments, only a first portion of the first media content M1 is visible in the UI window. In one or more embodiments, the software application 106 is configured to start the process of storing the navigation context. The process may be started for example upon performing a given interaction, upon request of the user 101A or when some predetermined condition is met.

In step 201, the software application 106 is configured to send, to the storage device (e.g. computing server 103E), media access data enabling to access to the first media content M1. The media access data may include an URL to access to the web page, an address and / or an identifier to get access to the first media content through a media server 103A, 103B, 103C. The media access data may include data encoding the first media content M1. The media access data are stored by the storage device (e.g. computing server 103E). In one or more embodiment, the navigation context data comprises the received media access data.

In step 205, the software application 106 is configured to perform a screenshot of the first portion of the first media content M1 which is currently displayed in the UI window W1.

In step 206, the software application 106 is configured to send the screenshot to the storage device (e.g. computing server 103E) for storage by the storage device (e.g. computing server 103E). In one or more embodiment, the navigation context data comprises the received screenshot.

In step 210, the software application 106 is configured to identify, in the first media content M1, a set of one or more media objects, such as: text, images, videos, animations, sound, applets and / or any documents, icon, button, menu, interactive objects, etc, included in the media content. For a web page, the media objects generally corresponds to resources of the web page. For example, for a web page, the code (e.g. HTML code) of the web page defines the web address of the web page, the layout of the web page, as well as the resources data defining the media objects in the web page: thus the resources may be identified by analysis of the code of the web page data and the resource access data may be extracted from the code of the web page.

The granularity with which the media objects are identified may be dependent on the application / needs or the coding scheme used for the first media content. In one or more embodiments, a media object may be a complex media object including one or more media sub-objects, an object container or a group of objects including one or more media objects, a hierarchy of media objects including one or more media objects and sub-objects organized in a hierarchy, an ordered list of media objects, etc. For example a text and an associated picture in a document may be grouped and processed as a single media object or be processed and identified separately.

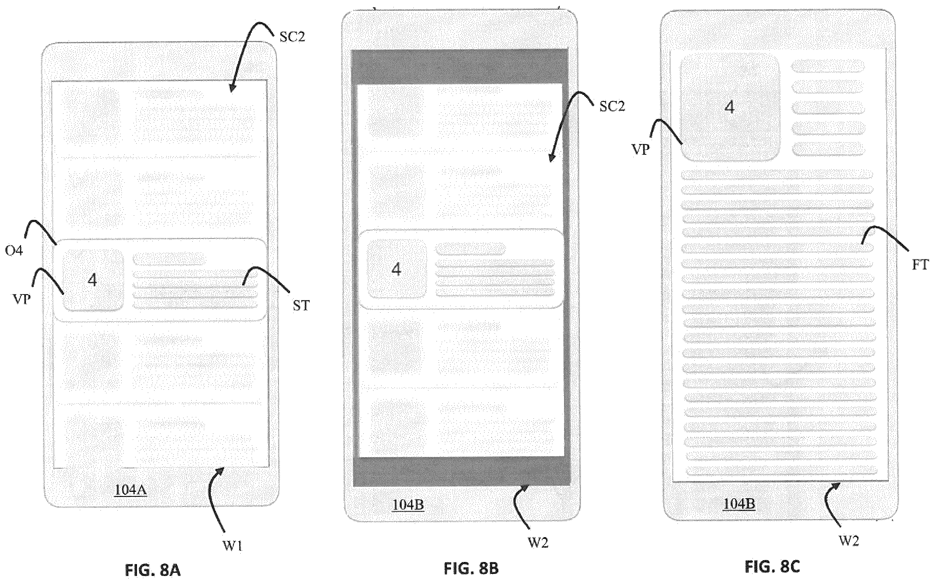

In one or more embodiments, the software application 106 is configured to allow the user 101A of the source electronic device 104A to identify and exclude one or more media objects that the user does not want to share. For example, media objects which are not part of the set of one or more media objects of interest are excluded. In another example, the user 101A may select one media object and perform some predetermined action to request that the other media objects have to be excluded. In one or more embodiments, the one or more excluded media objects may be blurred (see for example the FIGS. 8A-8B described below), shadowed or removed from the UI window to provide feedback to the user 101A on the exclusion. In one or more embodiments, the set of one or more media objects is updated to remove the one or more media objects that have been excluded.

In one or more embodiment, an identification of the media object may be transmitted together with the resource access data of the concerned media object. For a web page, the identification of the media object of interest may be extracted from the code of the web page, or be an identification allocated by the software application 106 and / or the storage device (e.g. computing server 103E) to the detected media object.

In step 215, the software application 106 is configured to identify, in the set of one or more media objects identified in step 210, a set of one or more volatile media objects. The identification of the media objects may thus be adapted to the type of web site or the type of web application or be specific to a web site. In one or more embodiments, all media objects in a page may be identified as volatile media objects.

In step 216, the software application 106 is configured to send to the storage device (e.g. computing server 103E), for the set of one or more volatile media objects, resource access data for accessing to resources enabling a restoration (e.g. a reproduction) of the set of one or more volatile media objects. For example, if the first media content is a web page, the resource access data may be pointers (e.g. URL) to resources of the concerned web page. In one or more embodiments, the resource access data may include the resources themselves (e.g. data encoding the media objects). The resource access data are stored by the storage device (e.g. computing server 103E) in association with the media access data. In one or more embodiment, the navigation context data comprises the received resource access data.

In step 220, the software application 106 is configured to identify, in the set of one or more volatile media objects, a set of one or more interactive media objects associated with one or more interaction functions. An interaction function may be for example: loading a web page pointed by the URL associated with the interactive media object, displaying a menu, displaying a sub-window, downloading a content, sending an email, starting an application, opening a communication session, etc. The triggering data may include an hyperlink (e.g. URL) on a target web page, a definition of the menu and associated resources, a code of the interaction function, etc. For a web page, the triggering data may be extracted from the code of the web page.

In step 221, the software application 106 is configured to send to the storage device (e.g. computing server 103E), for each identified interactive media object, triggering data for triggering the execution of the one or more interaction functions associated with the identified interactive media object. The triggering data may include an URL and / or a portion of code (e.g; HTML code) extracted from the code of the first media content. The triggering data are stored by the storage device (e.g. computing server 103E) in association with the media access data. In one or more embodiment, the navigation context data comprises the received triggering data.

In step 230, the software application 106 is configured to send to the storage device (e.g. computing server 103E), coordinates of the first portion in the first media content M1 currently displayed in the first UI (user interface) window. The coordinates of the first portion are stored by the storage device (e.g. computing server 103E) in association with the media access data. In one or more embodiment, the navigation context data comprises the received coordinates of the first portion.

The first portion of the first media content M1 currently displayed in a first UI window represents a zone of interest for the user 101A, for example a zone on which the user 101A may perform an interaction or a zone for which the user 101A may generate an annotation or a zone that the user 101A wants to share with other users. In one or more embodiments, the coordinates of the first portion are defined relatively to a coordinate system associated with the media content. The coordinates of the first portion may be dependent on the resolution and / or the size of the display screen of the source electronic device 104A.

In step 240, the software application 106 is configured to identify, in the set of one or more media objects identified in step 210, a set of one or more media objects of interest in the first portion of the first media content M1 currently displayed in the first UI window of the software application. A media object of interest may be interactive or not interactive. In one or more embodiments, one or more media objects of interest of the set of one or more media objects of interest is (are) interactive media object(s). A media object of interest may be volatile or non-volatile. In one or more embodiments, one or more media objects of interest of the set of one or more media objects of interest is (are) volatile media object(s).

The identification of the media objects of interest may be performed in different ways. In one or more embodiments, the identification of the media object of interest comprises detecting an interaction of the user 101A on an object in the first portion and identifying the media object on which the interaction has been detected. In one or more embodiments, the identification of the media object of interest comprises determining a viewing direction of the user 101A viewing the first media content and identifying one or more media objects of interest whose display area intersect with the viewing direction or whose display area is the closest to the intersection of the viewing direction with the display screen. In one or more embodiments, the identification of the media object of interest comprises determining one or more media objects that are the closest to a center position of the first portion of the first media content. In one or more embodiments, the identification of the media object of interest comprises: allowing a user to select (e.g. by contact on a touch sensitive display) one or more media objects of interest and identifying the selected one or more media objects of interest.

In step 241, the software application 106 is configured to send to the storage device (e.g. computing server 103E), an identification of the media object(s) of interest that has (have) been identified in step 240. The identification of the media object(s) of interest is stored in association with the media access data. In one or more embodiment, the navigation context data comprises the received identification of the media object(s) of interest.

In step 250, the software application 106 is configured to determine, for each object of interest, object coordinates of the object of interest with respect (relatively to) to the first portion (zone of interest) of the first media content M1 currently displayed in the first UI window W1.

In step 251, the software application 106 is configured to send to the storage device (e.g. computing server 103E), for each object of interest, object coordinates of the object of interest. The object coordinates are stored by the storage device (e.g. computing server 103E) in association with the media access data. In one or more embodiment, the navigation context data comprises the received object coordinates.

Steps 200-251 may be repeated for each navigation context to be stored, for example for another portion of the first media content or for a portion of another media content. For each execution of the steps 200-251, navigation context data are stored by the storage device (e.g. computing server 103E) and the corresponding navigation context may be restored on the basis of these navigation context data.

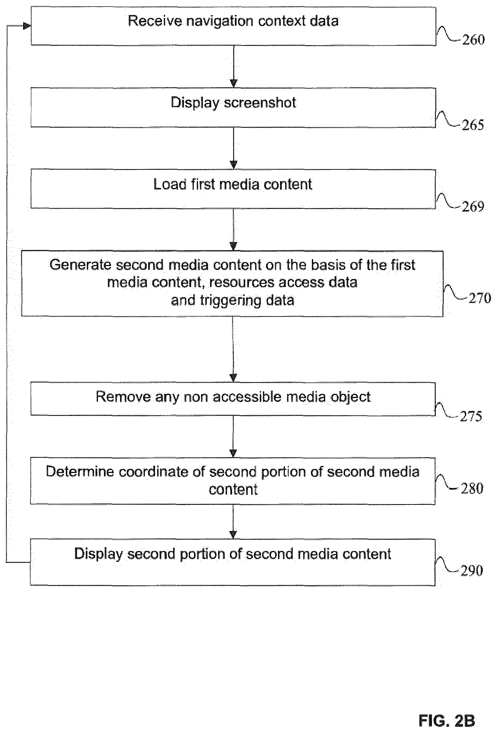

FIG. 2B represents a flow chart of a method for restoring a navigation context in accordance with one or more embodiments. While the various steps in the flowchart are presented and described sequentially, the man skill in the art will appreciate that some or all of the steps may be executed in different orders, may be combined or omitted, and some or all of the steps may be executed in parallel.

The method steps may be implemented by a destination electronic device (e.g the electronic device 104B) according to any embodiment disclosed herein and a storage device for storing the navigation context data. The storage device may be included in source electronic device or be a separate device. In one or more embodiments, the storage device may be a computing server (e.g. the front-end server 103E), a database 102A-102B, another electronic device 104B, 104C or may be included into a such device.

In one or more embodiments, in order to share the media contents, the first media content displayed on the source electronic device 104A has to be transferred to the other electronic devices of the plurality of electronic devices 104B-104C (i.e. destination electronic devices), through the computing server 103E. The first media content may be generated locally on the source electronic device 104A or loaded from a media server 1031-103C. The computing server 103E manages a database for storing the media access data and associated metadata. The associated metadata includes navigation context metadata.

In the below description, the method steps are implemented by the client application 106 of the source electronic device 104A and by the server application 107 of the front-end server 103E used as storage device, but are applicable to any other storage device and any other software application for displaying media contents.

In step 260, the software application 106 obtains from a storage device (e.g receives from a database, from a computing server 103E or from a source electronic device 104A) navigation context data and to start restoring a navigation context on the basis of the navigation context data. In one or more embodiments, the navigation context data are generated as described by reference to FIG. 2A.

The navigation context data may include:
- media access data for accessing to a first media content M1 through a media server; and / or
- a screenshot of a first portion of the first media content M1; and / or
- coordinates of the first portion relatively to the first media content M1; and / or
- identification of media object(s) in the first media content; and / or
- identification of media object(s) of interest within the first portion; and / or
- identification of volatile media object(s) within the first media content M1; and / or
- resource access data for restoring the set of one or more volatile media object(s) of the first media content M1; and / or
- triggering data for restoring the execution of one or more interaction function(s) associated with one or more interactive media object(s) of the first media content M1
- object coordinates of each media object of interest relatively to the first portion of the first media content.

In step 265, the software application 106 is configured to display the screenshot in a second UI window. In one or more embodiment, the display of the screenshot is performed before displaying the second portion of the second media content M2 in the second UI window (see step 290). In one or more embodiments, the screenshot may be used as a visual representation of the bookmark corresponding to the navigation context data. In one or more embodiments, one or more screenshots are displayed, and the navigation context corresponding to a screenshot is restored upon detection of an interaction of a user with the concerned screenshot and the basis of the associated navigation context data.

In step 269, the software application 106 is configured to load the first media content using the media access data. In one or more embodiments, a first media content M1B is loaded from a media server 103A, 103B, 103C. The loaded first media content M1B may differ from the first media content M1 originally displayed (step 200). For example, one or more volatile media objects of the first media content M1 as originally displayed in step 200 may not be accessible anymore at the time the first media content M1B is loaded.

In step 270, the software application 106 is configured to generate a second media content M2 reproducing at least partially the first media content M1. In one or more embodiments, the generation of the second media content M2 is performed on the basis of the navigation context data. In one or more embodiments, the second media content comprises the set of one or more media objects of interest identified in step 240. In one or more embodiments, the second media content comprises the set of one or more volatile media objects identified in step 215.

In one or more embodiments, the second media content M2 is generated by amending the loaded first media content M1B so as to restore the set of one or more volatile media objects, identified in step 215, on the basis of the resource access data of the set of one or more volatile media object(s) of the first media content M1. In some case, the restoration of some of volatile media objects may not be necessary, for example when the set of volatile media objects is not affected, amended or changed in the loaded first media content M1B compared to the first media content M1 originally displayed (step 200). In one or more embodiments, the restoration is performed for the one or more volatile media objects that are not present in the loaded first media content M1B or for the one or more volatile media objects on which one or more amendments occur. The amendment may be for example an amendment on a volatile media object or an amendment in the order in which the volatile media objects are presented.

In one or more embodiments, the interaction context is restored for the set of one or more media objects in the second media content on the basis of the triggering data for triggering the execution of interaction function(s) associated with interactive media objects.

In one or more embodiment, the generation of the second media content M2 is performed such that the interaction function(s) associated with interactive media objects may be triggered in the same manner as in the first media content M1 and the software application 106 is configured trigger an interaction function associated with an interactive media object on the basis of the triggering data used for generating the second media content M2. For example, if by clicking on a media object in the first media content M1, the user is redirected to a target web page, then by clicking on the corresponding media object in the second media content M2, the user is also redirected to the same target web page. For example, if by clicking on a media object in the first media content M1, a menu is opened, then by clicking on the corresponding media object in the second media content M2, the same menu will be opened in the second media content M2. Thus interaction context may be restored, even for volatile media objects.

In step 275, the software application 106 is configured to remove from the generated second media content M2 any media object that is not accessible from the recipient electronic device 104B and / or for the user 101B for which the navigation context is restored. In one or more embodiment, the software application 106 is configured to determine whether a media object of the set of one or more media objects is accessible for the user 101B. This may depend on user rights / profile of the user 101B compared to the user rights / profile of the user 101A with respect to the software application (e.g. web application) by means of which the first media content has been accessed.. This may concern a media content that is not publically available, or a media content that is private to the user 101A. The generation of the second media content M2 is performed such that a media object, which is not accessible to the user 101B of the software application 106 for which the navigation context is restored, is removed from the second media content M2 (e. g. for non volatile media content) or not inserted (e.g. for a volatile media object that is not present in the loaded first media content) into the second media content M2

In step 280, the software application 106 is configured to identify a portion of interest (hereafter the second portion) in the second media content M2 to be displayed. In one or more embodiments, the second portion is identified on the basis of the set of one or more media objects of interest and comprises at least one media object of interest among the set of one or more media objects of interest (e.g. for one or more media objects of interest identified in step 240).

In one or more embodiment, the coordinates of the second portion relatively to the second media content M2 are determined on the basis of the received object coordinates for the one or more object of interest. In one or more embodiment, the coordinates of the second portion relatively to the second media content M2 are determined such that, for a given object of interest, the object coordinates, relatively to the second portion of the second media content M2, of a media object of interest are identical (or as close as possible) to the object coordinates, relatively to the first portion of the first media content M1, of the same media object of interest.

In one or more embodiments, the coordinates of the second portion are further determined in dependence upon the resolution and / or size of the display screen of the destination electronic device 104B. In one or more embodiments, the coordinates of the second portion are determined to guaranty that the media object(s) of interest are inside the second portion and in a relative position, with respect to the display window, as similar as possible to the layout of the first media content M1, even if the layout of the second media content M2 is different from the layout of the first media content M1.

In one or more embodiment, the generation of the second media content M2 is performed such that the layout of the second media content M2 is identical to the layout of the first media content M1 or as similar as possible, depending on the resolution and / or size of the display screen of the destination electronic device 104B compared to the resolution and / or size of the display screen of the source electronic device 104A. If the resolution and / or size of the display screens are identical, the same layout may be used.

In step 290, the software application 106 is configured to display the second portion of the second media content M2 in the second UI window. In one or more embodiments, the display the second portion of the second media content M2 is performed upon detection of an interaction of the user 101B with in the second UI window while the screenshot is displayed (see step 265). Once the second portion is displayed, the user 101B may trigger interaction function(s) on the interactive object(s) that is (are) currently displayed in the second portion or may navigate in the second media content M2 to change the currently displayed portion.

Steps 260-290 may be repeated for each navigation context to be restored on the basis of navigation context data.

In one or more embodiments, the method for storing described by reference to FIG. 2A and the method for restoring a navigation context described by reference to FIG. 2B may be implemented by a same software application (e.g. the software application 106), but still implies a transfer of the navigation context metadata toward a storage device (e.g. a computing server 103E) and, optionally, of the media content itself. Thus the methods may be used to store remotely, on a storage device, navigation context metadata for a media content (e.g. a web page, or any hypertext document) and, optionally, the media content itself.

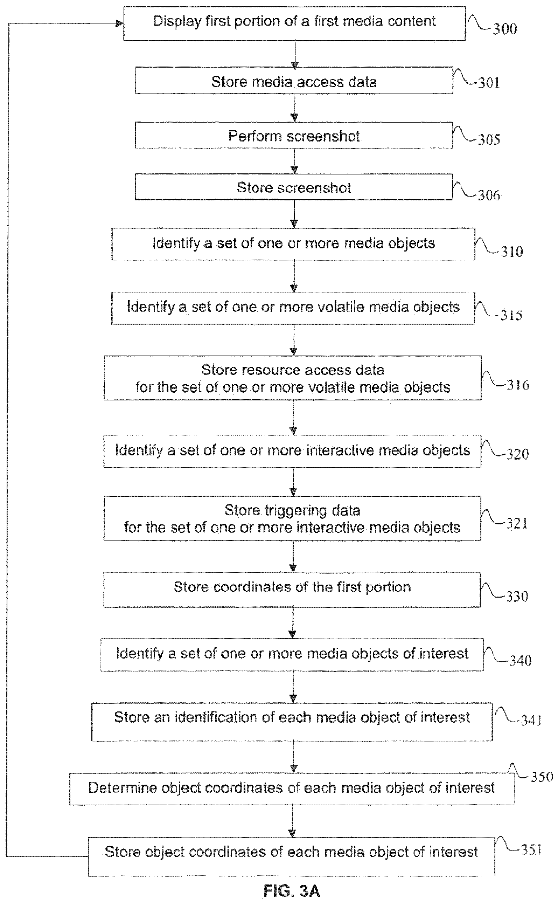

FIGS. 3A-3B represents a flow chart of a method for storing and restoring a navigation context on a same electronic device (e.g. electronic device 104A) in accordance with one or more embodiments. While the various steps in the flowchart are presented and described sequentially, the man skill in the art will appreciate that some or all of the steps may be executed in different orders, may be combined or omitted, and some or all of the steps may be executed in parallel.

The method steps may be implemented by an electronic device (e.g. the electronic device 104A) according to any embodiment disclosed herein. The method steps may for example be implemented by the client application 106 of the source electronic device 104A.

The method may be implemented without implying a transfer of media content or metadata to a storage device (e.g. computing server 103E). Thus the method may be used to store locally, on the electronic device 104A, navigation context metadata for a media content (e.g. a web page, or any hypertext document) and, optionally, the media content itself.

Steps 300-390 described below correspond respectively to steps 200-290 described by reference to FIGS. 2A-2B, with the simplifications due to the fact that the step are performed on a same and single electronic device. For example, no data need to be sent to a storage device. For example, the privacy of the media objects need not to be taken into account. To simplify, the embodiments and aspects already described by reference to FIGS. 2A-2B are not repeated here but remains applicable.

Referring to FIG. 3A, step 300, a first media content M1 (e.g. a web page) is displayed in a first UI window W1 of the software application 106 on a display screen of the source electronic device 104A and the software application 106 is configured to start the process of storing the navigation context. The process may be started for example upon performing a given interaction, upon request of the user 101A or when some predetermined condition is met.

In step 301, the software application 106 is configured to store media access data enabling to access to the first media content M1. The media access data may include an hyperlink (e.g. URL) to access to the web page, a shortcut, an address and / or an identifier to get access to the media content through a media server 103A, 103B, 103C.

In step 305, the software application 106 is configured to perform a screenshot of the first portion of the first media content M1 which is currently displayed in the UI window W1.

In step 306, the software application 106 is configured to store the screenshot.

In step 310, the software application 106 is configured to identify, in the first media content M1, a set of one or more media objects.

In step 315, the software application 106 is configured to identify, in the set of one or more media objects obtained at step 310, a set of one or more volatile media objects. The identification of the media objects may thus be adapted to the type of web site or the type of web application or be specific to a web site. In one or more embodiments, all media objects in a page may be identified as volatile media objects.

In step 316, the software application 106 is configured to store, for the set of one or more volatile media objects, resource access data for accessing to resources enabling a restoration (e.g. a reproduction) of the set of one or more volatile media objects.

In step 320, the software application 106 is configured to identify, in the set of one or more volatile media objects, a set of one or more interactive media objects associated with one or more interaction functions.

In step 321, the software application 106 is configured to store, for each identified interactive media object, triggering data for triggering the execution of the one or more interaction functions associated with the identified interactive media object.

In step 330, the software application 106 is configured to store coordinates of the first portion in the first media content M1 currently displayed in the first UI (user interface) window.

In step 340, the software application 106 is configured to identify, in the set of one or more media objects, a set of one or more media objects of interest in the first portion of the first media content M1 currently displayed in the first UI window of the software application.

In step 341, the software application 106 is configured to store an identification of the media object(s) of interest that has (have) been identified in step 340.

In step 350, the software application 106 is configured to determine, for each object of interest, object coordinates of the object of interest relatively to the first portion (zone of interest) of the first media content M1 currently displayed in the first UI window.

In step 351, the software application 106 is configured to store, for each object of interest, object coordinates of the object of interest.

Steps 300-351 may be repeated for each navigation context to be stored, for example for another portion of the first media content or for a portion of another media content. For each execution of the steps 300-351, navigation context data are stored by the source electronic device 104A and the corresponding navigation context may be restored on the basis of the stored navigation context data.

The stored navigation context data may thus include:
- media access data for accessing to a first media content M1 through a media server; and / or
- a screenshot of a first portion of the first media content M1; and / or
- coordinates of the first portion relatively to the first media content M1; and / or
- identification of media object(s) in the first media content; and / or
- identification of media object(s) of interest within the first portion; and / or
- identification of volatile media object(s) within the first media content M1; and / or
- resource access data for restoring the set of one or more volatile media object(s) of the first media content M1; and / or
- triggering data for triggering the execution of interaction function(s) associated with interactive media objects; and / or
- object coordinates of each media object of interest relatively to the first portion of the first media content.

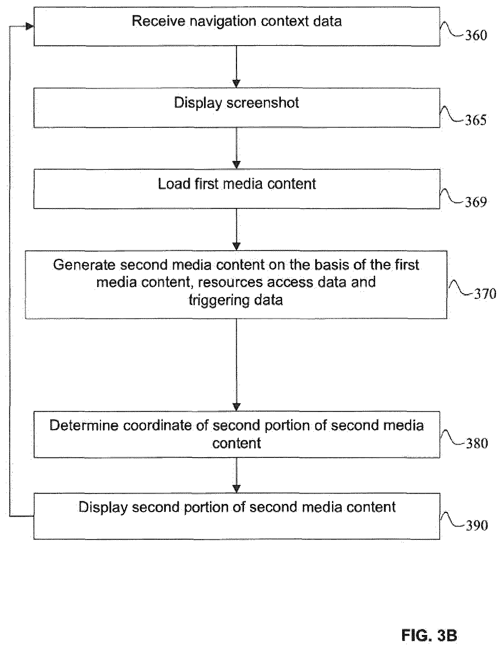

Referring to FIG. 3B, in step 360, the software application 106 retrieve (e.g. retrieve from a database, a data file, etc) navigation context data and to start restoring a navigation context on the basis of the retrieved navigation context data.

In step 365, the software application 106 is configured to display the screenshot in a second UI window. In one or more embodiment, the display of the screenshot is performed before displaying the second portion of the second media content M2 in the second UI window (see step 390). In one or more embodiments, the screenshot may be used as a visual representation of the bookmark corresponding to the navigation context data. In one or more embodiments, one or more screenshots are displayed, and the navigation context corresponding to a screenshot is restored upon detection of an interaction of a user with the concerned screenshot and the basis of the associated navigation context data.

In step 369, the software application 106 is configured to load the first media content using the media access data. In one or more embodiments, a first media content M1B is loaded from a media server 103A, 103B, 103C. The loaded first media content M1B may differ from the first media content M1 originally displayed (step 200).

In step 370, the software application 106 is configured to generate a second media content M2 reproducing at least partially the first media content M1. In one or more embodiments, the second media content comprises the set of one or more media objects of interest identified in step 340. In one or more embodiments, the second media content comprises the set of one or more volatile media objects identified in step 315.

In one or more embodiments, the second media content M2 is generated by amending the loaded first media content M1B so as to restore the set of one or more volatile media objects identified in step 315 on the basis of the resource access data associated respectively with volatile media object(s) of the first media content M1. In some case, the restoration of some of volatile media objects may not be necessary, for example when the set of volatile media objects is not affected, amended or changed in the loaded first media content M1B compared to the first media content M1 originally displayed (step 300). In one or more embodiments, the restoration is performed for the one or more volatile media objects that are not present in the loaded first media content M1B or for the one or more volatile media objects on which one or more amendments occur. The amendment may be for example an amendment on a volatile media object or an amendment in the order in which the volatile media objects are presented.

In one or more embodiment, the generation of the second media content M2 is performed such that the interaction function(s) associated with interactive media objects may be triggered in the same manner as in the first media content M1 and the software application 106 is configured trigger an interaction function associated with an interactive media object on the basis of the triggering data used for generating the second media content M2.

In one or more embodiments, the interaction context is restored for the set of one or more media objects in the second media content on the basis of the triggering data for triggering the execution of interaction function(s) associated with interactive media objects.

In step 380, the software application 106 is configured to identify a portion of interest (hereafter the second portion) in the second media content M2 to be displayed. In one or more embodiments, the second portion is identified on the basis of the set of one or more media objects of interest and comprises at least one media object of interest among the set of one or more media objects of interest (e.g. one or more media objects of interest identified in step 340).

In one or more embodiment, the coordinates of the second portion relatively to the second media content M2 are determined on the basis of the received object coordinates for the one or more object of interest. In one or more embodiment, the coordinates of the second portion relatively to the second media content M2 are determined such that, for a given object of interest, the object coordinates, relatively to the second portion of the second media content M2, of a media object of interest are identical (or as close as possible) to the object coordinates, relatively to the first portion of the first media content M1, of the same media object of interest

In step 390, the software application 106 is configured to display the second portion of the second media content M2 in the second UI window. In one or more embodiments, the display the second portion of the second media content M2 is performed upon detection of an interaction of the user 101B with in the second UI window while the screenshot is displayed (see step 365). Once the second portion is display, the user 101B may trigger interaction function(s) on the interactive object(s) that is (are) currently displayed in the second portion or may navigate in the second media content M2 to change the currently displayed portion.

Steps 360-390 may be repeated for each navigation context to be restored on the basis of navigation context data.

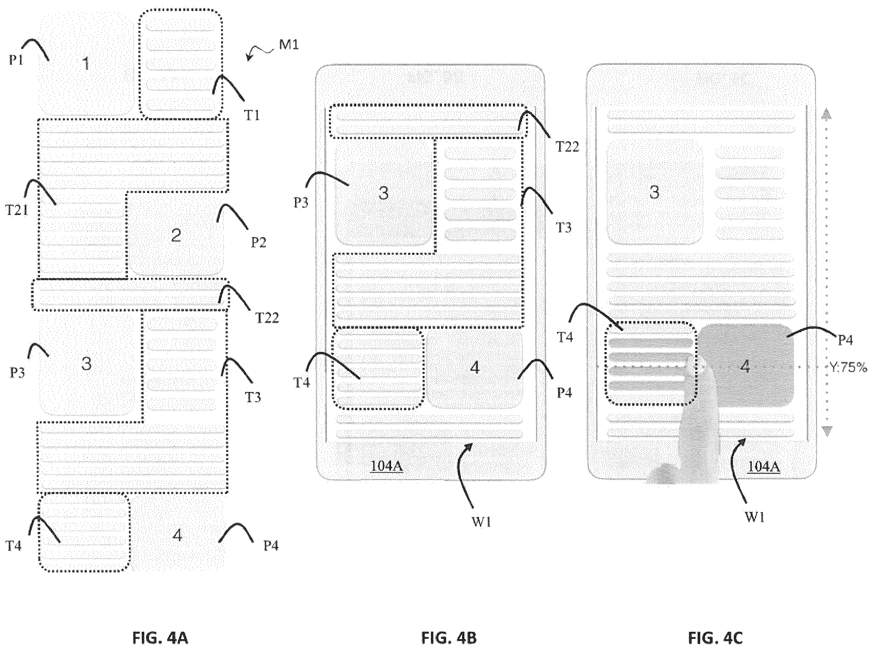

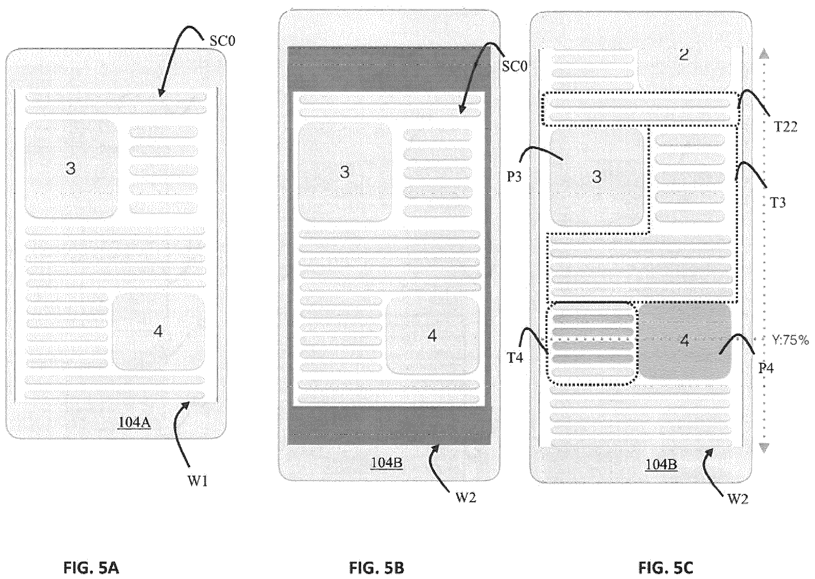

FIGS. 4A-4C and 5A-5C represent media contents and user interfaces in accordance with one or more embodiments.

FIG. 4A shows a first media content M1 (e.g. a web page) including several media objects: a first picture P1 and an associated text T1, a second picture P2 and associated texts T21, T22, a third picture P3 and an associated text T3, and a fourth picture P4 and an associated text T4.

FIG. 4B shows a first portion of the first media content M1 of FIG. 4A displayed in a window W1 of a software application on a display screen of a source electronic device 104A. In the first portion, only the third picture P3, the text T3, the fourth picture P4 and the text T4, the text T22 are visible while the other media objects P1, T1, P2, T21 are not visible or only partly visible.

FIG. 4C shows that, upon selection of the picture P4 by a user 101A of the source electronic device 104A, a media object is identified as media object of interest, the media object of interest including the picture P4 and at least a portion of the associated text T4. In the shown example, the object coordinates of the media object of interest are determined as being at height Y= 75% from the top of the window W1. In the shown example, only the vertical position of the media object of interest is considered, but both vertical and horizontal position relatively to the window W1 may be taken into account.

FIG. 5A shows a screenshot SC0 of the first portion of the first media content M1 displayed in the window W1 shown in FIG. 4B. The third picture P3, the text T3, the fourth picture P4 and the text T4 are visible in the screenshot SC0.

FIG. 5B shows the screenshot SC0 of FIG. 5A displayed (see for example steps 265 or 365) in a window W2 of a software application on a display screen of a destination electronic device 104B. As can be seen on FIG. 5B, due to the difference between the size and resolution of the display screen of the source electronic device 104A and the display screen of the destination electronic device 104B, the displayed screenshot may not cover completely the window W2 and / or may not fit the display ratio of the display screen of the destination electronic device 104B.

FIG. 5C shows the content of the second window W2 once the second media content has been generated on the basis of the first media content. Only a portion of the second media content is visible, which includes the media object of interest (i.e. the picture P4 and the portion of the associated text T4). In the shown example, the object coordinates of the media object of interest with respect to the portion displayed in the second window W2 are the same as in FIG. 4C. In the shown example, the vertical position of the media object of interest is centered at a height Y= 75% from the top of the window W2. As the size of the display screen of the recipient electronic device 104B is bigger than the display screen of the source electronic device 104B, additional media objects (in the example of FIG. 5C, part of the picture P2) may be visible compared to the media objects visible in the UI window W1 on the electronic device 104A.

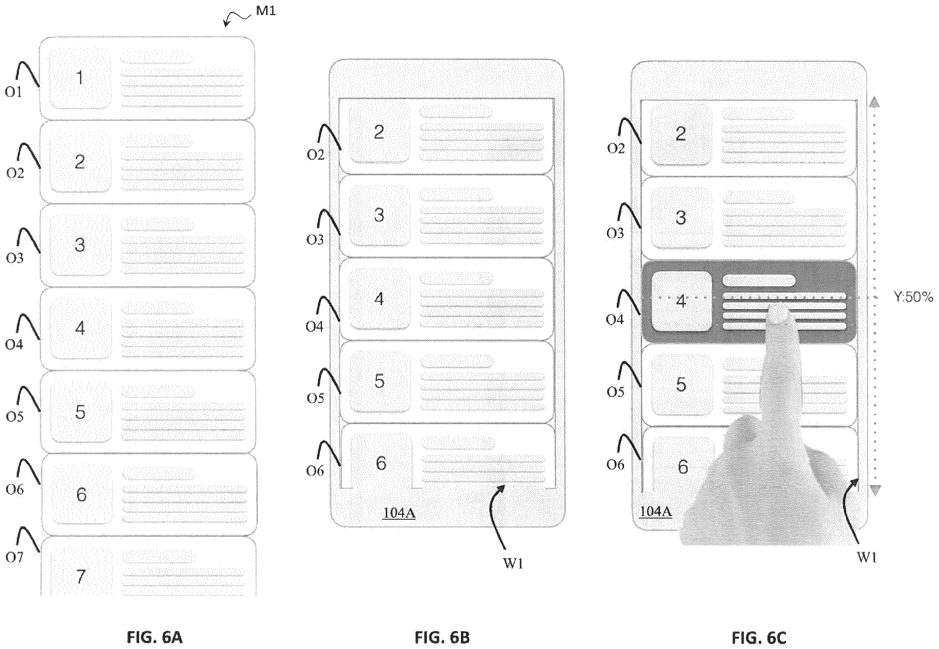

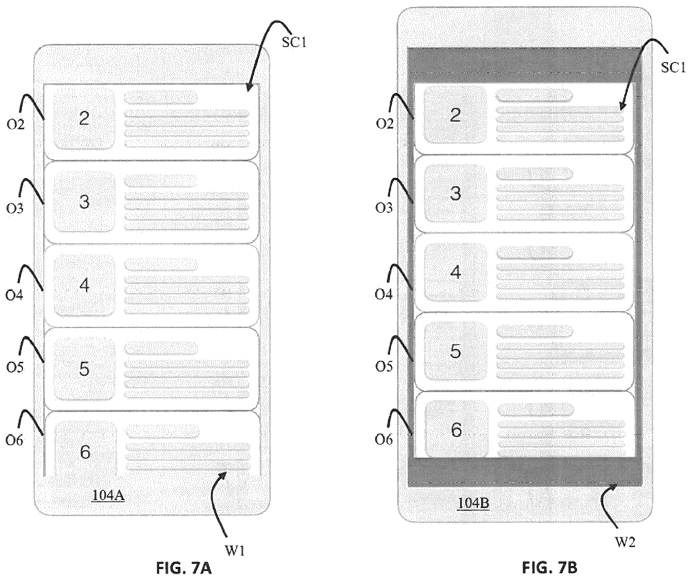

FIGS. 6A-6C and 7A-7C represent media contents and user interfaces in accordance with one or more embodiments.

FIG. 6A shows a first media content M1 (e.g. a web page) including a list of media objects O1 to O7 wherein each media object being a group (or container) of media objects including a picture and an accompanying short text. The list of media objects O1 to O7 results from a search, performed by a search engine, on the basis of search criteria entered by a user 101A of the source electronic device 104A. As the result of such a search may vary in dependence upon the time at which the search is performed and / or upon personalization parameters (e.g. user profile and / or user cookies and /or user location), the list of media objects O1 to O7 is considered to be a set of volatile media objects and associated resource access data are stored for enabling a restoration of this list of media objects O1 to O7, in the same order.

FIG. 6B shows a first portion of the first media content M1 of FIG. 6A displayed in a window W1 of a software application on a display screen of a source electronic device 104A. In the first portion, only the media objects O2 to O6 are visible while the other media objects O1 and O7 are not visible.

FIG. 6C shows that, upon selection of the media object O4 by a user 101A of the source electronic device 104A, the volatile media object O4 is identified as media object of interest. In the shown example, the object coordinates of the media object of interest are determined as being at height Y= 50% from the top of the window W1. In the shown example, only the vertical position of the media object of interest is considered, but both the vertical and horizontal positions relatively to the window W1 may be taken into account. In the shown example, the volatile media object O4 includes a picture VP and a short text ST.

FIG. 7A shows a screenshot SC1 of the first portion of the first media content M1 displayed in a window W1 shown in FIG. 6B. The media objects O2 to O6 are visible in the screenshot SC1.

FIG. 7B shows the screenshot SC1 of FIG. 7A displayed (see for example steps 265 or 365) in a window W2 of a software application on a display screen of a destination electronic device 104B. As can be seen on FIG. 7B, due to the difference between the size and resolution of the display screen of the source electronic device 104A and the display screen of the destination electronic device 104B, the displayed screenshot may not cover completely the window W2 and / or may not fit the display ratio of the display screen of the destination electronic device 104B.

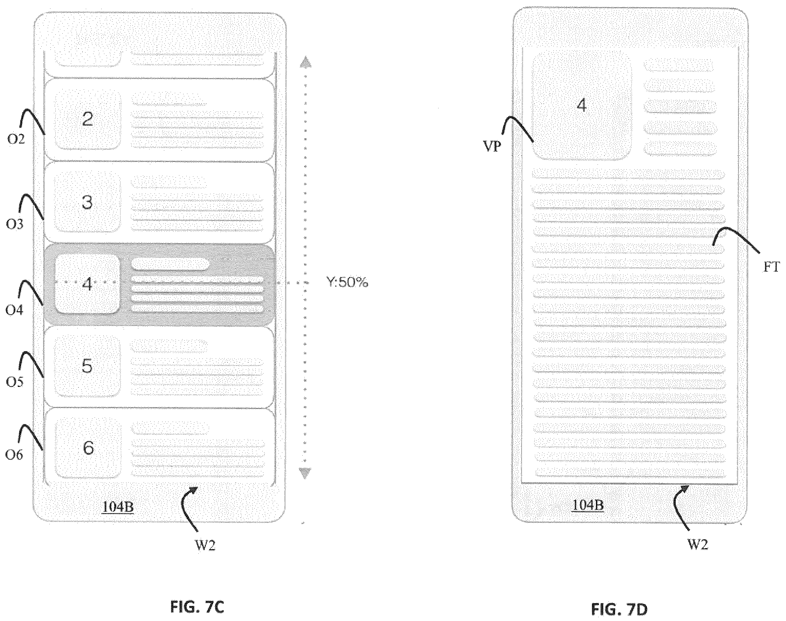

FIG. 7C shows the content of the second window W2 once the second media content M2 has been generated on the basis of the first media content M1. The list of media objects O1 to O7 is reproduced, by restoring the exact order of the media objects O1 to O7 corresponding to the initial content of the first media content (see FIG. 6A), even if triggering the search with the same search criteria would result in different list of media objects if the search would be requested by a user 101B on the destination electronic device 104B.

As shown in FIG. 7C, only a portion of the second media content is visible in the second window W2 and this portion includes the media object O4 of interest. In the shown example, the object coordinates of the media object of interest with respect to the portion displayed in the second window are the same as in FIG. 6C. In the shown example, the vertical position of the media object of interest is centered at a height Y= 50% from the top of the window W2. As the size of the display screen of the recipient electronic device 104B is bigger than the display screen of the source electronic device 104B, additional media objects may be visible compared to the media objects visible in the UI window W1 on the electronic device 104A.

FIG. 7D shows the content of the second window W2 once an interaction on the media object O4 of interest of the second media content M2 has been detected in the window W2 of FIG. 7C. Upon detection of an interaction on the media object O4, one or more interaction functions may be triggered. In the shown example, the triggered function is a redirection to a target web page (e.g. on the basis of a hyperlink contained in the triggering data) and the target web page is displayed in the window W2. The target web page may comprises further information associated with the media object O4 of interest, for example a picture VP and a full text FT. Thus interaction context is restored and the user may continue the navigation from this target web page.

FIGS. 8A-8C represent further user interfaces in accordance with one or more embodiments.

FIG. 8A shows a screenshot SC2 of the first portion of the first media content M1 displayed in a window W1 shown in FIG. 6B in which some the media objects distinct that the media object of interest are blurred (e.g. upon request of the user 101A or automatically upon identification of the media object of interest O4). The media objects O2 to O3 and O5 to O6 are thus not readable in the screenshot SC2. In the screenshot SC2, the media object O4 includes the picture VP and the summary text ST.

FIG. 8B shows the screenshot SC2 of FIG. 7A displayed (see for example steps 265 or 365) in a window W2 of a software application on a display screen of a destination electronic device 104B. As can be seen on FIG. 7B, due to the difference between the size and resolution of the display screen of the source electronic device 104A and the display screen of the destination electronic device 104B, the displayed screenshot may not cover completely the window W2 and / or may not fit the display ratio of the display screen of the destination electronic device 104B.

FIG. 8B shows the content of the second window W2 once the second media content M2 has been generated on the basis of the first media content M1. The list of media objects O1 to O7 is not reproduced. Instead, only the media object O4 of interest is reproduced and the other media objects have been removed.

As shown in FIG. 8C, as only a single media object O4 of the list of media objects has to be restored in the second media content, a larger view on the media object O4 may be presented. For example, if the media object O4 comprises an hyperlink to a target web page including more information associated with the media object O4, presenting a the larger view on the media object O4 may include displaying the target web page. In the shown example, the larger view on the restored media object O4 comprises the picture VP and a full text FT, instead of the short text ST previously visible in FIG. 6A-6C.

The embodiments described therein may be applied for the restoration of a navigation context in any kind of software, whether a web application or an application for navigating into media content (e.g. a map application that display an interactive map of a town and in which a media object of interest may be a location in the town and / or a metro station, etc).

## Claims

1. A method for restoring a navigation context of a software, said method comprising:
storing a navigation context, wherein storing the navigation context comprises,
storing media access data enabling to access to a first media content displayed in said software;
identifying, in the first media content, a set of one or more media objects;
identifying, in the set of one or more media objects, a set of one or more media objects of interest in a first portion of the first media content currently displayed in a first user interface, UI, window; and
storing an identification of the one or more media objects of interest;
restoring the navigation context, wherein restoring said navigation context comprises
loading the first media content on the basis of the media access data;
generating a second media content on the basis of the loaded first media content, wherein the second media content comprises the set of one or more media object of interest;
displaying a second portion of the second media content in a second UI window, wherein the second portion comprises at least one media object of interest among the set of one or more media objects of interest.

2. A method according to claim 1, said method further comprising:
wherein storing said navigation context further comprises
identifying, in the set of one or more media object, a set of one or more volatile media objects;
storing resource access data for accessing to resources for restoring said set of one or more volatile media objects;
wherein generation said second media content comprises
amending at least partially the loaded first media content by restoring in said second media content at least one volatile media object of the set of one or more volatile media objects on the basis of said resource access data.

3. A method according to claim 1 or 2, said method further comprising:
wherein storing said navigation context further comprises
identifying, in the set of one or more volatile media objects, a set of one or more interactive media objects associated with one or more interaction functions; and
for each identified interactive media object, storing triggering data for triggering the execution of the one or more interaction functions associated with the identified interactive media object;
wherein said second media content comprises at least one interactive media object among said set of one or more interactive media objects,
wherein restoring said navigation context further comprises, for each interactive media object in the second media content,
enabling a user to trigger said one or more interaction functions associated with a considered interactive media object, and
triggering said one or more interaction functions associated with a considered media object of interest on the basis of the triggering data.

4. A method according to claim 3, wherein at least one media object of interest of the set of one or more media objects of interest is an interactive media object of the set of one or more interactive media objects.

5. A method according to any of the preceding claims, further comprising for at least one object of interest,
wherein storing said navigation context further comprises
storing object coordinates of the object of interest in the first portion of the first media content currently displayed in the first UI window;
wherein restoring said navigation context further comprises
determining second coordinates of the second portion in the second media content on the basis of the object coordinates.

6. A method according to any of the preceding claims, said method further comprising:
wherein storing said navigation context comprises performing a screenshot of the first portion in the first media content;
wherein restoring said navigation context comprises displaying said screenshot in the second UI window;
wherein displaying said screenshot is performed before displaying the second portion of the second media content in the second UI window;
wherein displaying the second portion of the second media content in the second UI window of said software is performed upon detection of an interaction of a user with in the second UI window.

7. A method according to any of the preceding claims, wherein identifying one or more media objects of interest in the first portion of the first media content comprises detecting an interaction of a user on at least one media object in the first portion and identifying said at least one media object on which the interaction has been detected.

8. A method according to any of the preceding claims, wherein identifying one or more media objects of interest in the first portion of the first media content comprises determining a viewing direction of a user viewing the first media content and identifying one or more media objects of interest whose display area intersects with the viewing direction or whose display area is the closest to the intersection of the viewing direction with the display screen.

9. A method according to any of the preceding claims, wherein identifying one or more media objects of interest in the first portion of the first media content comprises determining one or more media objects that are the closest to a center position of the first portion of the first media content.

10. A method according to any of the preceding claims, wherein identifying one or more media objects of interest in the first portion of the first media content comprises allowing a user to select one or more media objects of interest and identifying the selected one or more media objects of interest.

11. A method according to any of the preceding claims, wherein generating the second media content comprises: determining whether a media object of the set of one or more media objects is accessible for a user for which the navigation context is restored and inserting, in the second media content, a media object only if the considered media object is accessible.

12. A method according to any of the preceding claims, wherein the layout of the second media content is different from the layout of the first media content and adapted to a screen resolution and / or screen size of a display screen.

13. A method for restoring a navigation context of a software, said method comprising:
obtaining navigation context data, the navigation context data comprising,
media access data enabling to access to a first media content, wherein the first media content comprises a set of one or more media objects;
an identification of a set of one or more media objects of interest that were displayed in a first portion of the first media content in a first user interface, UI, window during a navigation;
restoring the navigation context, wherein restoring said navigation context comprises
loading the first media content on the basis of the media access data;
generating a second media content on the basis of the loaded first media content, wherein the second media content comprises the set of one or more media object of interest;
displaying a second portion of the second media content in a second UI window, wherein the second portion comprises at least one media object of interest among the set of one or more media objects of interest.

14. A method according to claim 13, wherein the first media content comprises a set of one or more volatile media objects, said method further comprising:
wherein said navigation context data further comprises resource access data for accessing to resources for restoring a set of one or more volatile media objects identified in the set of one or more media object;
wherein generating said second media content comprises
amending at least partially the loaded first media content by restoring in said second media content at lest one volatile media object of the set of one or more volatile media objects on the basis of said resource access data.

15. An electronic device, comprising
a processor;
a memory operatively coupled to the processor, said memory comprising computer readable instructions which, when executed by the processor, cause the processor to carry out the steps of the method according to any of the preceding claims.

16. A computer program product comprising computer readable instructions which, when executed by a computer, cause the computer to carry out the steps of the method according to any of claims 1 to 14.
